**Europäisches Patentamt**

(19) **European Patent Office**

**Office européen des brevets**

(11) Veröffentlichungsnummer: **0 076 936**
**B1**

## EUROPÄISCHE PATENTSCHRIFT

(45) Veröffentlichungstag der Patentschrift:
04.06.86

(51) Int. Cl.⁴: **B 64 C 3/14**

(21) Anmeldenummer: **82108579.2**

(22) Anmeldetag: **17.09.82**

(54) Profile, insbesondere Tragflügelprofile für Luftfahrzeuge.

(30) Priorität: **10.10.81 DE 3140351**

(43) Veröffentlichungstag der Anmeldung:
**20.04.83 Patentblatt 83/16**

(45) Bekanntmachung des Hinweises auf die Patenterteilung:
**04.06.86 Patentblatt 86/23**

(84) Benannte Vertragsstaaten:
**FR GB IT NL SE**

(56) Entgegenhaltungen:
**WO - A - 81/02557**
**FR - A - 2 159 422**
**FR - A - 2 302 910**
**FR - A - 2 314 096**
**FR - A - 2 384 671**
**FR - A - 2 427 249**

**Die Akte enthält technische Angaben, die nach dem
Eingang der Anmeldung eingereicht wurden und die
nicht in dieser Patentschrift enthalten sind.**

(73) Patentinhaber: **DORNIER GMBH, Postfach 1420,
D-7990 Friedrichshafen1 (DE)**

(72) Erfinder: **Schmidt, Wolfgang, Dr.-Ing.,
Niederholzstrasse 33/2, D-7990 Friedrichshafen 1 (DE)**
Erfinder: **Longo, José Maria, Tiroler Hof 9A,
D-7774 Deggenhausertal/Untersiggingen (DE)**

(74) Vertreter: **Landsmann, Ralf, Dipl.-Ing., Kleeweg 3,
D-7990 Friedrichshafen 1 (DE)**

## Beschreibung

Die Erfindung betrifft ein Profil, insbesondere Tragflügelprofil für Luftfahrzeuge, mit einer Auslegungsmachzahl zwischen 0,2 und 0,9 und im Hochgeschwindigkeitsbereich einem Bereich des Auftriebsbeiwertes von −0,2 bis 0,6 bzw. im Niedergeschwindigkeitsbereich bis 1,5.

An Profilen der genannten Art bilden sich, wie bekannt, an der Profiloberseite lokale Gebiete aus, innerhalb der die Strömung Überschallgeschwindigkeit aufweist, die mit schwachen Verdichtungsstössen abschliessen sollten. Die Gebiete mit Überschall-Strömungsgeschwindigkeit können sich daher relativ weit über die Profiltiefe erstrecken.

In der Vergangenheit wurde die Ausbildung von Tragflügelprofilen bei der Konzipierung von Luftfahrzeugen gängigen Profilkatalogen entnommen. Infolge der Energiesituation wird neuerdings in verstärktem Masse nach Möglichkeiten gesucht, die Wirtschaftlichkeit von Luftfahrzeugen zu verbessern.

Nach der sich abzeichnenden Tendenz wird jetzt nach besonderen Berechnungsverfahren von vorgegebenen Druck- bzw. Geschwindigkeitsverteilungen auf der Saug- bzw. Druckseite der Profile nach rein aerodynamischen Gesichtspunkten ausgegangen. Dabei ist naturgemäss die Auslegung der Profiloberseite für eine widerstandsarme Rekompression von Gebieten mit Überschall-Strömungsgeschwindigkeiten, d.h. die Erzielung möglichst hoher Auftriebsbeiwerte bei kleinen Widerstandsbeiwerten, massgebend.

Die Entwicklung führte beispielsweise zu einer Profilausbildung entsprechend der DE-OS 2 254 888 mit günstigem Widerstandsverhalten bei hohen Unterschall-Machzahlen. Die bekannte Profilausbildung weist einen Vorderkantenabschnitt auf, durch dessen Gestaltung die Strömung an der Profiloberseite rasch auf einen Maximalwert beschleunigt wird. Die Oberseite des Profils ist abgeflacht ausgebildet, wodurch die im Nasenbereich erzielte maximale Beschleunigung der Strömung über einen weiten Bereich aufrechterhalten und damit ein konstanter Druckverlauf erzielt werden soll.

Infolge des sich am hinteren Profilabschnitt ausbildenden plötzlichen Druckanstiegs ergibt sich jedoch ein erhöhter Profilwiderstand. Ungünstige Widerstandsverhältnisse stellen sich an den genannten Profilen auch bei Über- bzw. Unterschreitung der Auslegungsmachzahl ein.

Eine andere Entwicklungsrichtung, z.B. entsprechend der DE-OS 2 626 276, geht von Profilen mit einem grossen mittleren Nasenradius und einem an die Profilnase anschliessenden Bereich der Profiloberseite mit sich verringernder Krümmung aus, wobei sich dieser Bereich über einen relativ gross bemessenen Abschnitt der Profil-Sehnenlänge erstreckt. Es sollen mit dieser Profilausbildung die Auftriebs- und Leistungseigenschaften bei niedrigen Anströmgeschwindigkeiten bis zum überkritischen Betrieb ohne nachteilige Auswirkungen im überkritischen Betrieb verbessert werden. Nachteilig ist jedoch die Druckverteilung mit starker Saugspitze im Nasenbereich bei einer Machzahlzunahme gegenüber der Auslegungsmachzahl und bei Anstellwinkeländerung.

Es ist ferner eine Profilausbildung nach der DE-OS 2 712 717 bekannt geworden, die Ausbildungsmerkmale der beiden aufgezeigten Entwicklungsrichtungen in sich vereinigen soll, d.h. Erreichung einer Druckverteilung mit stark ausgeprägtem Saugbereich am vorderen Profilabschnitt, der kontinuierlich zum Profilende abfällt. Bei den bekannten Profilausbildungen waren naturgemäss die Auslegung der Profiloberseite für eine widerstandsarme Rekompression von Überschallgebieten, d.h. Erzielung möglichst hoher Auftriebsbeiwerte bei niedrigen Widerstandsbeiwerten, massgebend.

Die vorliegende Erfindung hat demgegenüber zur Aufgabe, Profile bzw. Tragflügel zu schaffen, die bei einer jeweiligen Machzahl, insbesondere auch innerhalb eines Machzahlbereiches, einen möglichst weiten Auftriebsbereich mit günstigem Widerstands- und Momentenverhalten einschliessen. Dabei soll auch die Profilunterseite weite Gebiete aufweisen, innerhalb der die Strömung Überschallgeschwindigkeit sitzt, wobei die Überschallgebiete stossfrei oder durch schwache Stösse abschliessen sollen.

Ferner ist es zur Vermeidung von starken Momentenänderungen Aufgabe der Erfindung, an Profilober- und bzw. oder Profilunterseite, auch bei sich ändernder Machzahl bzw. sich änderndem Anstellwinkel, die Lage auftretender Stösse zu stabilisieren. In die gestellte Aufgabe soll der Niedergeschwindigkeitsbereich mit einbezogen sein.

Die gestellte Aufgabe ist erfindungsgemäss dadurch gelöst, dass

a) das Profil einen Bereich konstanter Krümmung aufweist, der sich auf der Profiloberseite angenähert zwischen 30% und 50% der relativen Profiltiefe (x/l) erstreckt und der auf der Profilunterseite angenähert zwischen 20% und 40% der relativen Profiltiefe liegt, dass

b) die Bereiche konstanter Krümmung zur Stossfixierung mit einem zweiten, sich an jeweils ein erstes, im Profilnasenbereich befindliches Krümmungsmaximum an der Profiloberseite bei angenähert 60% bis 70% der relativen Profiltiefe und an der Profilunterseite bei angenähert 35% bis 50% der relativen Profiltiefe mit $|K| > 0,60$ abschliessen und dass

c) an diese Bereiche maximaler Krümmung Rekompressionsbereiche mit jeweils mindestens zwei Wendepunkten in der Konturkrümmung an der Profiloberseite und Profilunterseite bis hin zur Profilhinterkante anschliessen.

Bei einem erfindungsgemäss ausgebildeten Tragflügelprofil wird durch den Bereich konstanter Krümmung sowohl der Profilober- als auch der Profilunterseite eine stabile, stossfreie Überschallströmung über einen grossen Auftriebs-und Machzahlbereich aufrechterhalten.

Im besonderen bewirkt die Ausbildung der Profilunterseite gute aerodynamische Eigenschaften bei kleinen Auftriebsbeiwerten bis zu hohen Machzahlen hin. Die Ausbildung der Profilunterseite in Verbindung mit der Gestaltung der Profiloberseite führt zu den obengenannten aerodynamischen Eigenschaften, z.B. hinsichtlich des Widerstandsanstieges und der Buffetkennwerte, und zwar nicht nur in einem Auslegungspunkt, sondern über einen grossen Auftriebsbereich. Der Rekompressionsbeginn bzw. Stoss ist in seiner Profiltiefenlage fixiert durch die angegebenen Krümmungsmaxima an Profilober- bzw. Profilunterseite. Dadurch werden unerwünschte Stosswanderungen, die starke Momentänderungen nach sich ziehen, vermieden. Dies trifft auch zu bei sich änderndem Anstellwinkel bzw. sich ändernder Machzahl. Die Krümmungsverläufe mit den Wendepunkten führen zur Ausbildung höchstens schwacher Stösse bzw. einer ablösefreien Kompression.

Zwar weist das bekannte Profil gemäss DE-OS 2 712 717 auf der Profiloberseite ebenfalls ein Krümmungsmaximum und dahinter zwei Wendepunkte auf, jedoch ist dieses Krümmungsmaximum äusserst schwach, und einer der genannten Wendepunkte liegt weit hinten ohne Zusammenhang mit dem Krümmungsmaximum. Die erfindungsgemäss angegebene Ausbildung ist vorteilhaft auch auf Propellerblätter und Blätter von Hubschrauberrotoren und ebenso auf die Blätter von Turbomaschinen anwendbar.

In der Zeichnung sind zwei Ausführungsformen der erfindungsgemässen Profilausbildung dargestellt und nachfolgend im einzelnen näher beschrieben.

Es zeigt:

Fig. 1 in schematischer Darstellung und verkleinertem Massstab die Profilform eines Ausführungsbeispiels mit 14,5% maximaler Profildicke,

Fig. 2 den Kennlinienverlauf der Krümmung von Profilober- und Profilunterseite gemäss Fig. 1,

Fig. 3 den Kennlinienverlauf der Krümmung im Nasenbereich des Profils der Profilober- und Profilunterseite gemäss Fig. 1,

Fig. 4 den Kennlinienverlauf der Druckverteilung an Profilober- und Profilunterseite und der lokalen Machzahlverteilung an der Profilunterseite bei einer Machzahl von M = 0,760, einer Reynoldszahl von Re = $18,71 \cdot 10^6$ und einem Auftriebsbeiwert von $C_a$ = 0,069 gemäss Fig. 1,

Fig. 5 den Kennlinienverlauf der Druckverteilung an Profilober- und Profilunterseite und der lokalen Machzahlverteilung an der Profiloberseite bei einem gegenüber Fig. 4 unterschiedlichen Auftriebsbeiwert von $C_a$ = 0,42,

Fig. 6 den Kennlinienverlauf der Druckverteilung an Profilober- und Profilunterseite und der lokalen Machzahlverteilung an der Profiloberseite bei einer Niedergeschwindigkeits-Machzahl von M = 0,20, einer Reynoldszahl von Re =

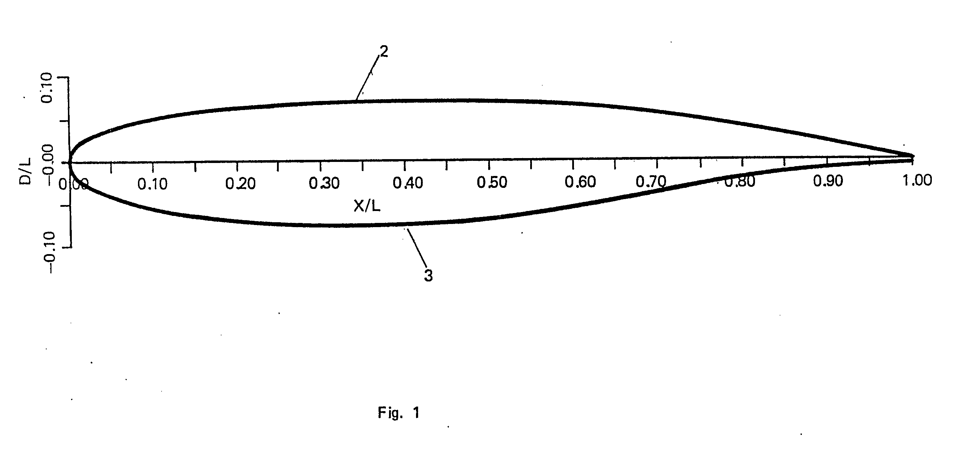

$18,71 \cdot 10^6$ und einem Auftriebsbeiwert von $C_a$ = 1,43 gemäss Fig. 1,

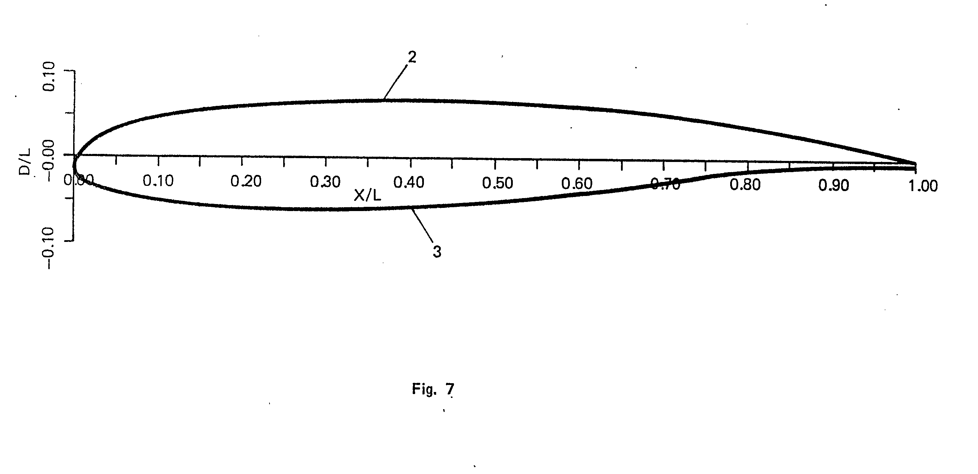

Fig. 7 in schematischer Darstellung und verkleinertem Massstab die Profilform eines weiteren Ausführungsbeispiels mit 12,5% maximaler Profildicke,

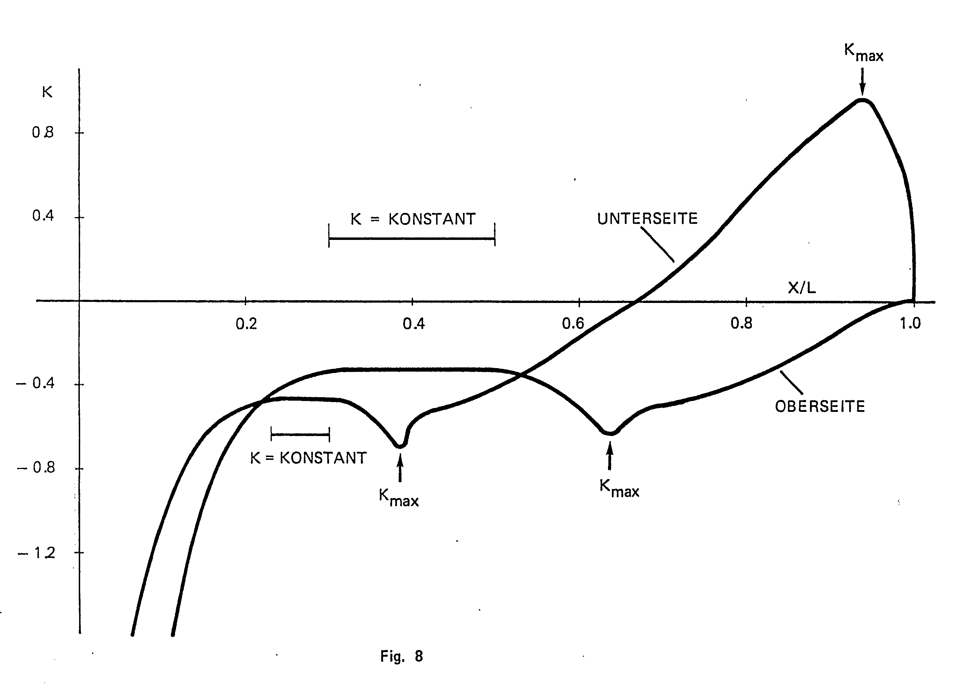

Fig. 8 den Kennlinienverlauf der Krümmung von Profilober- und Profilunterseite gemäss Fig. 7,

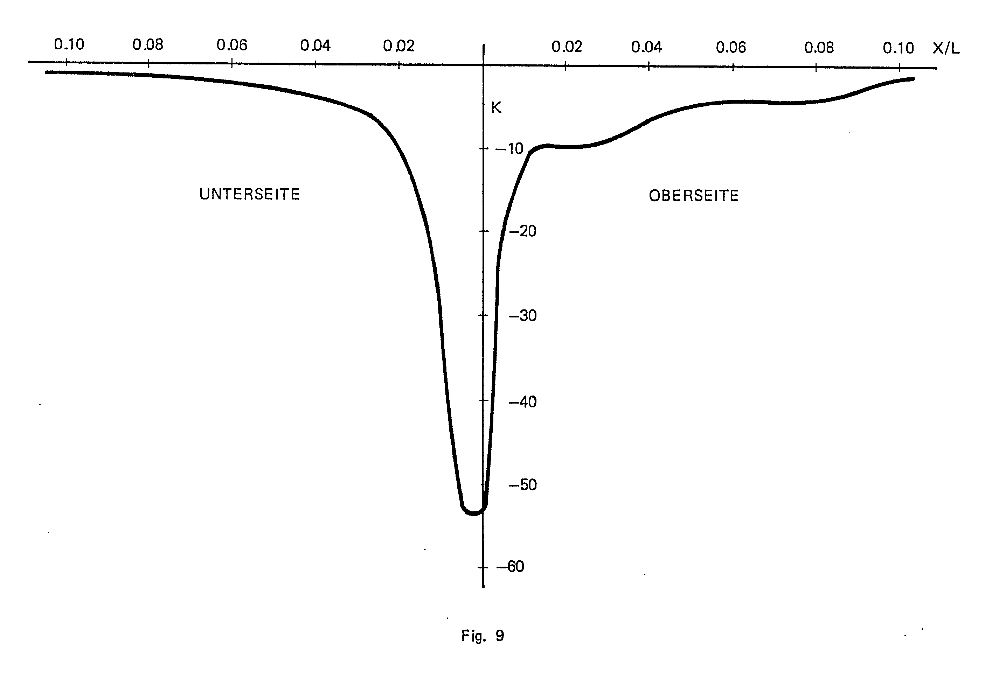

Fig. 9 den Kennlinienverlauf der Krümmung im Nasenbereich des Profils an Profilober- und Profilunterseite, gemäss Fig. 7,

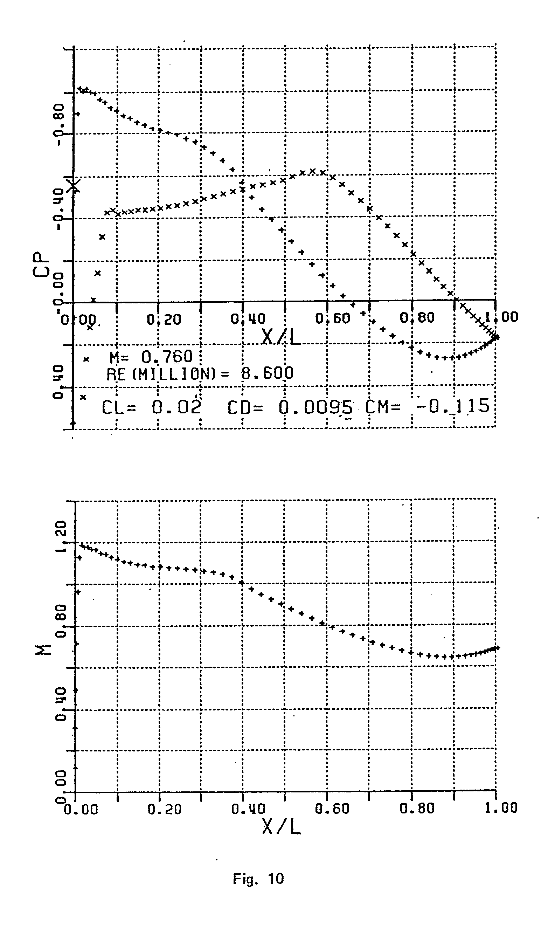

Fig. 10 den Kennlinienverlauf der Druckverteilung an der Profilober- und der Profilunterseite und der lokalen Machzahlverteilung an der Profilunterseite bei einer Machzahl von M = 0,760, einer Reynoldszahl von Re = $8,6 \cdot 10^6$ und einem Auftriebsbeiwert von $C_a$ = 0,02 gemäss Fig. 7,

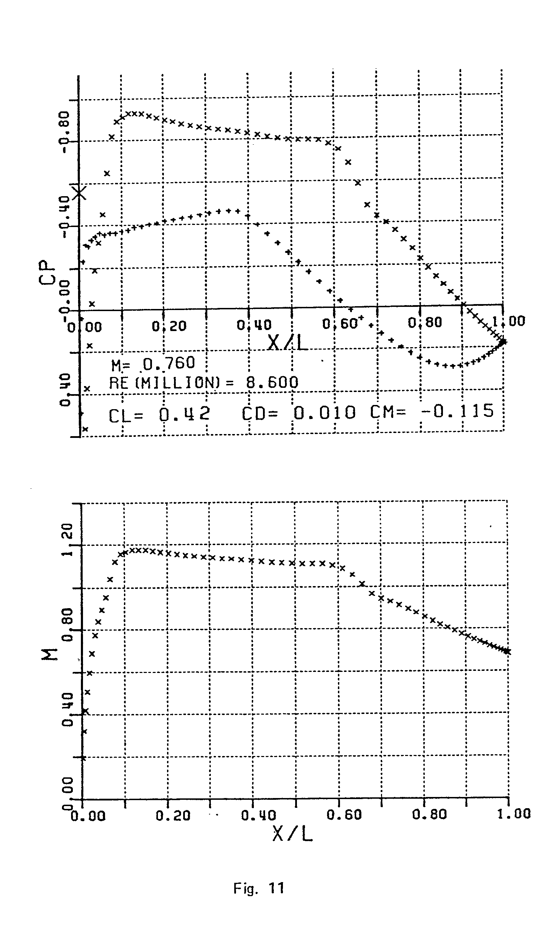

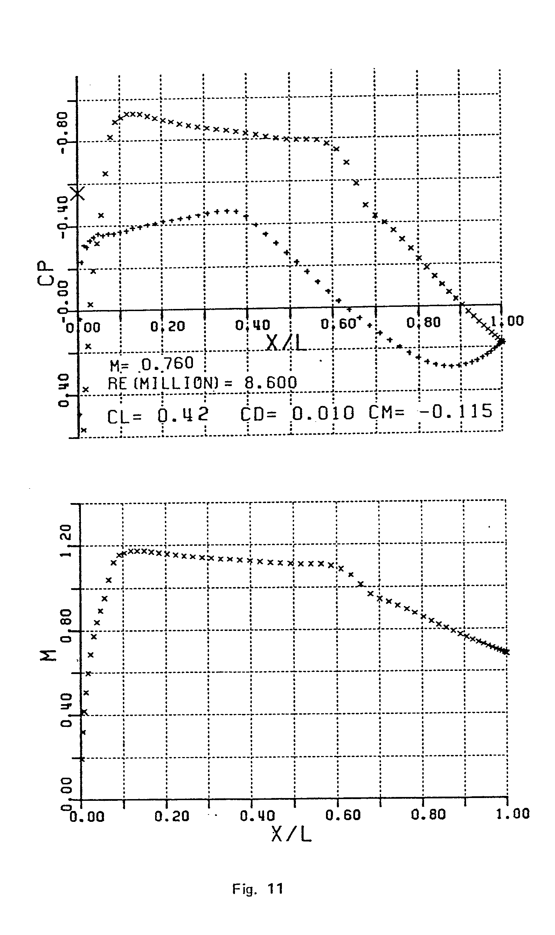

Fig. 11 den Kennlinienverlauf der Druckverteilung an der Profilober- und Profilunterseite und der lokalen Machzahlverteilung an der Profiloberseite bei einem gegenüber Fig. 10 geänderten Auftriebsbeiwert von $C_a$ = 0,42,

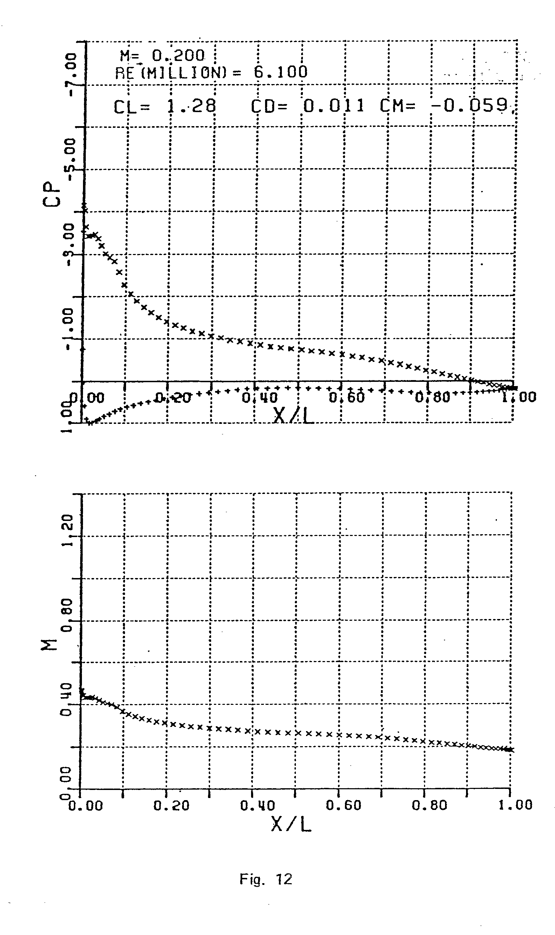

Fig. 12 den Kennlinienverlauf der Druckverteilung an Profilober- und Profilunterseite und der lokalen Machzahlverteilung an der Profiloberseite bei einer Niedergeschwindigkeits-Machzahl von M = 0,20, einer Reynoldszahl von Re = $6,1 \cdot 10^6$ und einem Auftriebsbeiwert von $C_a$ = 1,28 gemäss Fig. 7 und

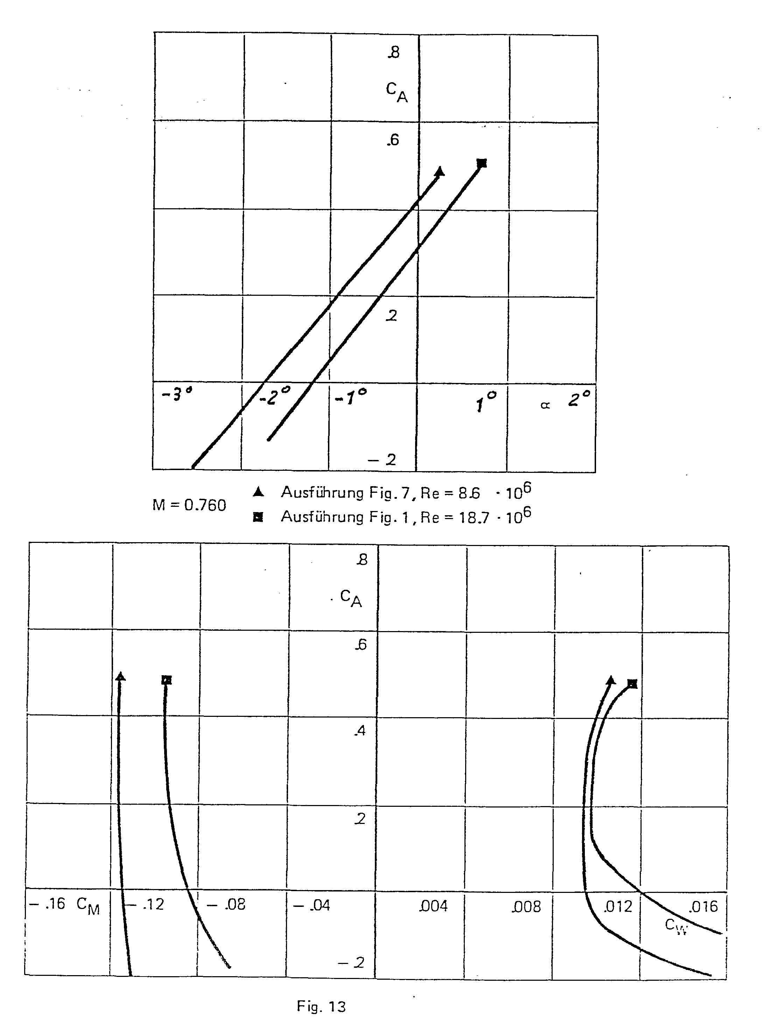

Fig. 13 den Kennlinienverlauf Auftrieb über Anstellwinkel bzw. Momenten- und Widerstandsbeiwertverlauf über dem Auftriebsbeiwert (CM△Momentenbeiwert; CD△Widerstandsbeiwert).

In der Zeichnung sind nach Fig. 1 bzw. Fig. 7 zwei Ausführungsbeispiele der Profilausbildung insgesamt schematisch in einem Koordinatensystem dargestellt, wobei auf der Ordinate die relative Profildicke d/l und auf der Abszisse die relative Profiltiefe x/l aufgetragen ist. In diesem Koordinatensystem bedeutet der Punkt 0 die Profilvorderkante. Die Profiloberseite ist hierbei mit 2 und die Profilunterseite mit 3 bezeichnet.

Für die beiden Ausführungsformen gemäss Fig. 1 bzw. 7 ist die gleiche Auslegungsmachzahl gültig, während die Profildicken unterschiedlich sind. Die Ausführungsform gemäss Fig. 1 geht von einem 14,5% dicken und die Ausführungsform gemäss Fig. 7 von einem 12,5% dicken Profil aus.

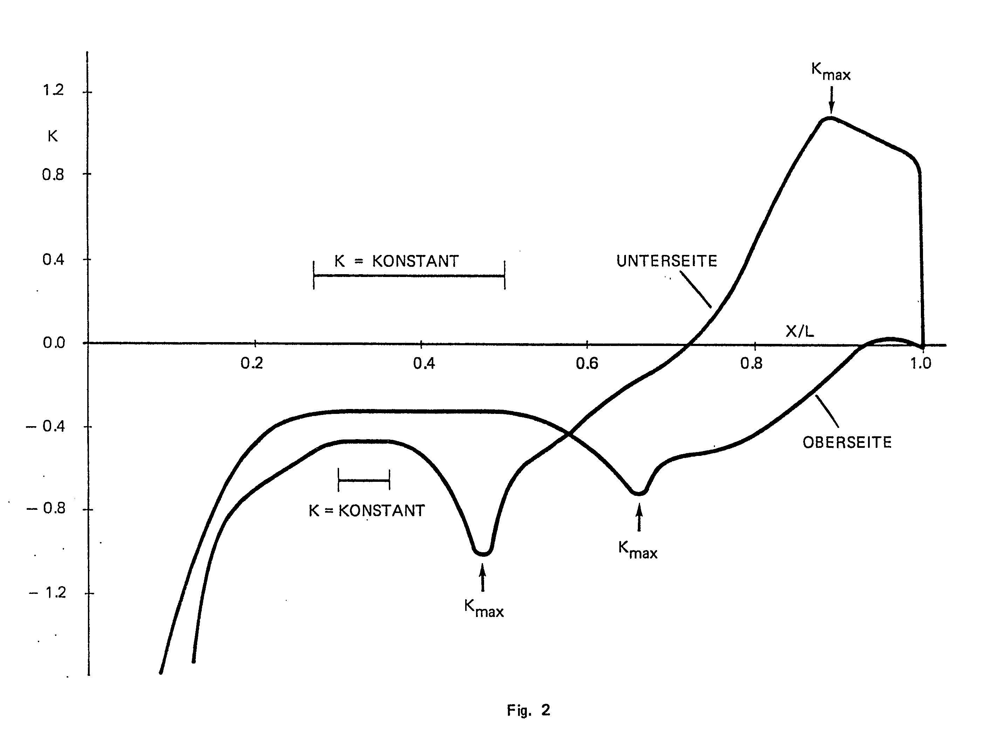

Wie die Fig. 2 bzw. die Fig. 8 für die jeweilige Ausführung erkennen lässt, nimmt die Krümmung auf der Profilober- und Profilunterseite annähernd gleichförmig ab, und zwar auf der Profiloberseite 2 bis |K| = −0,33 bei x/l = 30% und auf der Profilunterseite 3 bis |K| = −0,47 bei x/l = 30% der Profiltiefe im Ausführungsbeispiel gemäss Fig. 1 bzw. bei x/l = 25% gemäss Ausführungsbeispiel in Fig. 7. Hierdurch wird eine gleichmässige Expansion der Strömung erzielt. Führt diese Beschleunigung auf örtliche Überschallgeschwindigkeit, dann vermeidet diese Krümmungsverteilung die übliche Saugspitze bzw. die bei bekannten Profilausbildungen erwünschte plateauartige Druckverteilung, aus der ein hoher Momentenbeiwert $c_M$ resultiert.

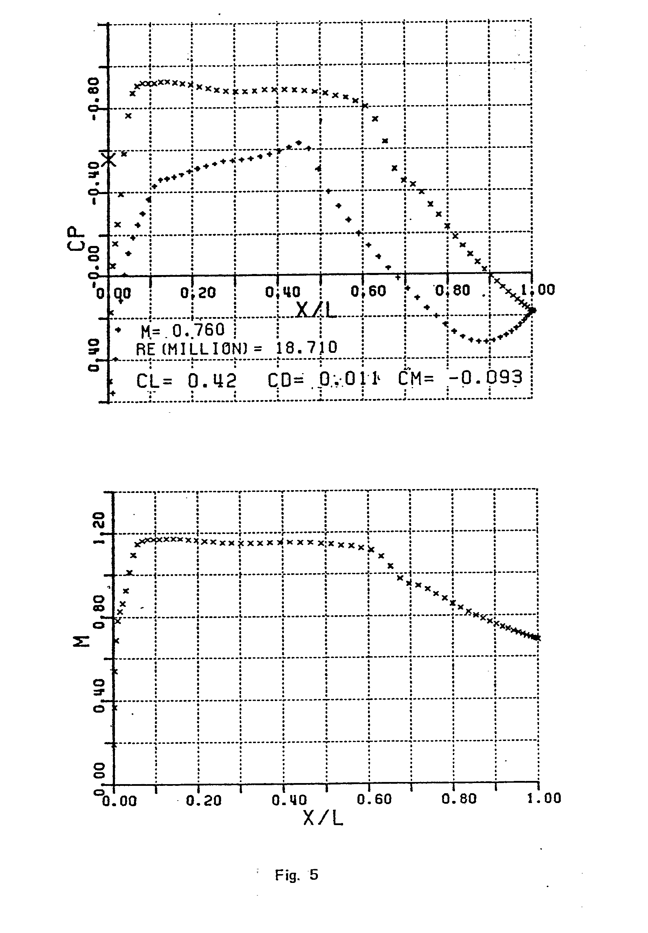

An den vorangehend angegebenen Krümmungsbereich schliesst auf der Profilober- und der Profilunterseite je ein Bereich mit konstanter Krümmung (im Rahmen der Fertigungsgenauigkeit) an. Gemäss Fig. 2 ist die Krümmung konstant zwischen x/l = 27% bis 50% auf der Profiloberseite 2 und 30% bis 36% auf der Profilunterseite 3 bzw. für die zweite Ausführung in Fig. 8 auf der Profiloberseite von 30% bis 50% und auf der Profilunterseite zwischen 23% und 30% x/l. Diese Bereiche konstanter Krümmungen führen in den jeweiligen Auslegungspunkten zu Überschallströmungen über den jeweiligen Abschnitt des Profils mit gleichmässig abnehmender Überschallmachzahl (z.B. Fig. 5; Fig. 11).

Der Bereich der konstanten Krümmung an der Profiloberseite ist unabhängig von Auslegungsmachzahl und Auftriebsbeiwert, während der Bereich konstanter Krümmung an der Profilunterseite von der gewünschten Profildicke und vorangehend genannten Auslegungsparametern abhängt.

Anschliessend an die Bereiche konstanter Krümmung nimmt die Krümmung stetig zu, und zwar über einen Krümmungswendepunkt zu einem Krümmungsmaximum.

Dieser Krümmungsverlauf leitet eine Kompression ein, die in ihrer Lage nahezu fixiert ist für beide Profilseiten. Dies führt infolge geringer Stosswanderung in einem weiten Auftriebs- und Machzahlbereich zu den genannten günstigen aerodynamischen Eigenschaften. Die Abnahme der Krümmung von diesem Maximum auf der Profiloberseite gegen Null an der Profilhinterkante, erfolgt bei den beschriebenen Ausführungen über zwei Krümmungswendepunkte. Dieser Krümmungsverlauf führt zur erwünschten Verminderung der Stossstärke ausserhalb des Auslegungsbereiches, bzw. zu einer Erweiterung des Einsatzbereiches der Profile.

Den Abschluss des Krümmungsverlaufes in Richtung auf die Profilhinterkante bildet eine Krümmungsverteilung, die eine Hinterkantenablösung zu hohen Auftriebsbeiwerten hin verschiebt. Zusätzlich ist der Auslauf gegen Null fertigungstechnisch von Vorteil. Gemäss Fig. 2 kann dabei der abschliessende Bereich der Profiloberseite konvex ausgeführt sein.

Analog ist die Profilunterseite, anschliessend an das Krümmungsmaximum in einem ersten Bereich entsprechend der Profiloberseite zur Abminderung starker Stösse bei kleinen Auftriebsbeiwerten ausgeführt. Bei einem Wert von x/l = 0,72 in Fig. 2 bzw. x/l = 0,66 in Fig. 8 erhält die Profilunterseite einen konvexen Verlauf zur Erzielung des gewünschten «Rear-Loading-Effektes», gemäss bisher üblichen Ausführungen.

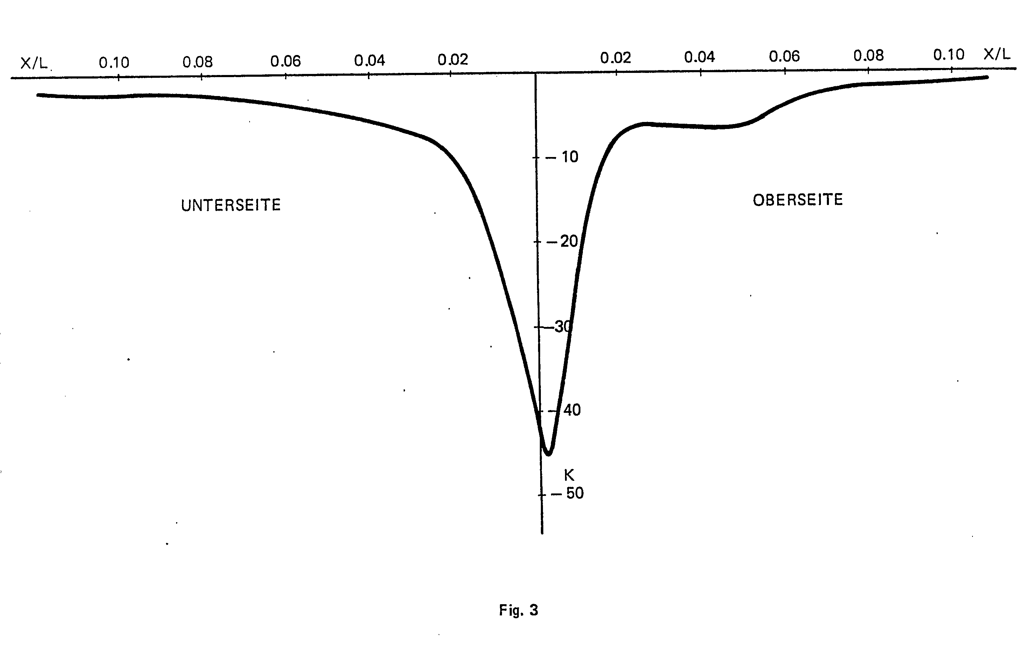

Fig. 3 bzw. Fig. 9 zeigen in entsprechendem Massstab den Krümmungsverlauf im Nasenbereich der genannten Profile, wobei abweichend von bisher bekannten Profilausbildungen kein ausgeprägter, kreisförmiger Nasenteil vorhanden ist. Die hier vorliegenden Krümmungsverteilungen gemäss der beanspruchten Ausführungen vermeiden Saugspitzen und damit Strömungsablösungen an der Profilnase und führen ausserdem bei höheren Machzahlen (siehe Fig. 5) zu einer hohen Auftriebsbelastung des vorderen Profilbereiches (Front-Loading-Effekt) und damit zu einem erwünschten, geringen Längsmomentenbeiwert.

Diese Ausbildung der Profilnase hat unmittelbare Auswirkungen auf den Anschlussbereich des Krümmungsverlaufes, wie bereits vorangehend bei der Beschreibung der Fig. 2 bzw. 8 erläutert.

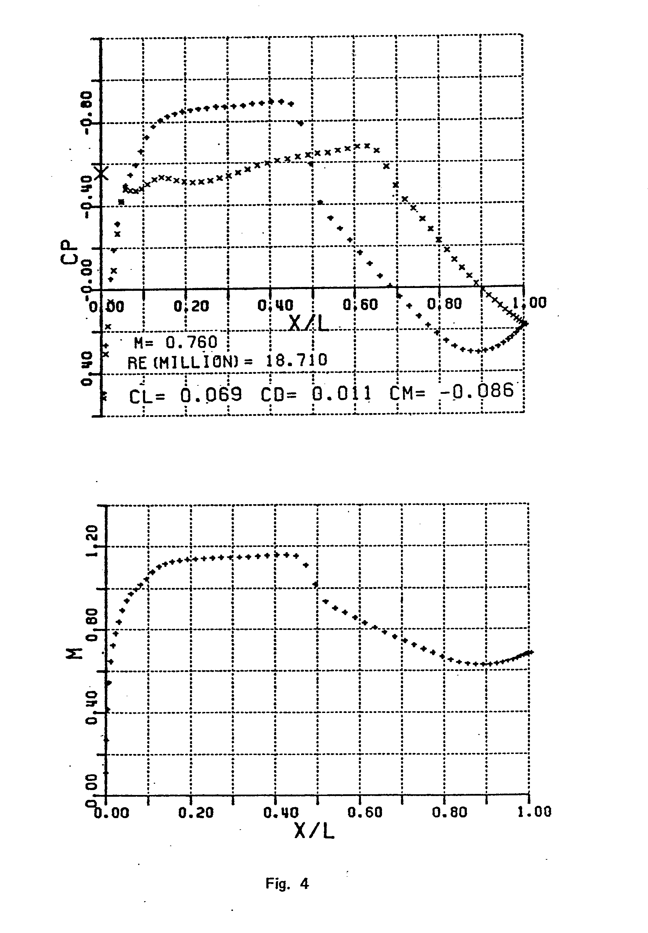

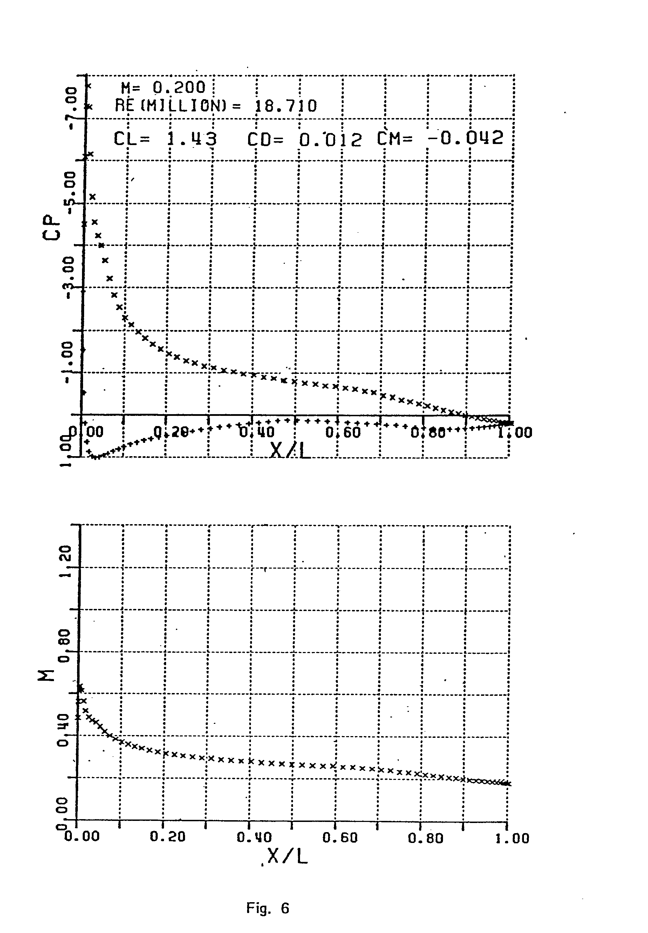

Die Fig. 4 bis 6 bzw. 10 bis 12 zeigen für die Ausführung der Profilausbildung gemäss Fig. 1 und Fig. 7 typische Druckverteilungen und örtliche Machzahlverteilungen, wie sie bei der Diskussion der Krümmungsverteilung geschildert sind.

Fig. 13 zeigt charakteristische Leistungsdaten für beide Profilausbildungen (Fig. 1 bzw. 7). Diese sind insbesondere der erzielbare grosse Auftriebsbereich ausserhalb des transsonischen Widerstandsanstieges, der lineare und nahezu konstante Momentenverlauf über dem Auftrieb und ferner der lineare Auftriebsverlauf bei hohen Machzahlen.

In der Zeichnung und in der Beschreibung entsprechen sich dabei die Bezeichnungen für den Widerstandsbeiwert $C_W \triangleq CD$ und des Auftriebsbeiwertes $C_A \triangleq CL$.

Ferner steht in der Zeichnung für den Momentenbeiwert die Bezeichnung CM und für den Druckbeiwert die Bezeichnung CP.

## Patentansprüche

1. Profil, insbesondere Tragflügelprofil für Luftfahrzeuge, mit einer Auslegungsmachzahl zwischen 0,2 und 0,9 und im Hochgeschwindigkeitsbereich einem Bereich des Auftriebsbeiwertes von −0,2 bis 0,6 bzw. im Niedergeschwindigkeitsbereich bis 1,5, wobei

a) das Profil einen Bereich konstanter Krümmung aufweist, der sich auf der Profiloberseite (2) angenähert zwischen 30% und 50% der relativen Profiltiefe (x/l) erstreckt und der auf der Profilunterseite (3) angenähert zwischen 20% und 40% der relativen Profiltiefe (x/l) liegt,

b) die Bereiche konstanter Krümmung zur Stossfixierung mit einem zweiten, sich an jeweils ein erstes, im Profilnasenbereich befindliches Krümmungsmaximum an der Profiloberseite (2) bei angenähert 60% bis 70% der relativen Profiltiefe (x/l) und an der Profilunterseite (3) bei angenähert 35% bis 50% der relativen Profiltiefe (x/l) mit |K|>0,60 abschliessen und wobei

c) an diese Bereiche maximaler Krümmung Rekompressionsbereiche mit jeweils mindestens zwei Wendepunkten in der Konturkrümmung an der Profiloberseite (2) und Profilunterseite (3) bis hin zur Profilhinterkante anschliessen.

2. Tragflügel nach Anspruch 1, bei dem im Nasenbereich des Profils an der Profiloberseite (2) und der Profilunterseite (3) jeweils ein erstes Krümmungsmaximum mit $|K|>40\%$ vorgesehen ist.

3. Tragflügelprofil nach Anspruch 1, bei dem an der Profiloberseite vier Krümmungswendepunkte des Krümmungsverlaufes zwischen 2% bis 6%, zwischen 55% bis 65%, zwischen 65% bis 75% und 85% bis 95% der relativen Profiltiefe (x/l) vorgesehen ist.

4. Tragflügelprofil nach den Ansprüchen 1 bis 3, bei dem die Profilunterseite (3) in einem Bereich bis zu 20% der relativen Profiltiefe (x/l) abnehmenden Krümmungsverlauf besitzt.

5. Tragflügelprofil nach Anspruch 1, bei dem die Profilunterseite (3) ein drittes Krümmungsmaximum bei 85% bis 95% der relativen Profiltiefe (x/l) aufweist.

6. Tragflügelprofil nach Anspruch 1, bei dem sich die Krümmungsverläufe von Profilober- und Profilunterseite zwischen 50% bis 60% der relativen Profiltiefe (x/l) überschneiden.

7. Tragflügelprofil nach Anspruch 1, bei dem der Oberseitenkrümmungsverlauf an der Hinterkante gegen Null geht.

8. Tragflügelprofil nach Anspruch 1, bei dem der Unterseitenkrümmungsverlauf an der Hinterkante gegen Null geht.

9. Tragflügelprofil nach Anspruch 1, bei dem die Oberseitenform ausserhalb des Nasenbereichs unabhängig von der Profildicke ist.

**Claims**

1. A section, in particular an aerofoil section for aircraft, having a design mach number of from 0.2 to 0.9 and a range of lift coefficients of from −0.2 to 0.6 in the high speed range and of up to 1.5 in the low speed range, wherein:

a) the section has a region of constant curvature which lies on the section upper side (2) between approximately 30% and 50% of the relative section depth (x/l) and on the section underside (3) between approximately 20% and 40% of the relative section depth (x/l),

b) for shock fixing, the regions of constant curvature end in a second curvature maximum of $|K| > 0.60$ which on the section upper side (2) is at approximately 60% to 70% of the relative section depth (x/l) and on the section underside (3) at approximately 35% to 50% of the relative section depth (x/l), the second curvature maximum following in each case upon a first curvature maximum situated in the nose region of the section, and wherein:

c) these regions of maximum curvature are followed by recompression regions each having at least two turning points in the curvature contour on the section upper side (2) and section underside (3) extending up to the rear edge of the section.

2. An aerofoil according to claim 1, in which a first curvature maximum with $|K| >40\%$ is pro-

vided in the nose region of the section both on the section upper side (2) and on the section underside (3).

3. An aerofoil section according to claim 1, wherein four curvature turning points of the path of curvature are provided on the section upper side at 2% to 6%, 55% to 65%, 65% to 75% and 85% to 95% of the relative section depth (x/l).

4. An aerofoil section according to claims 1 to 3, wherein the profile underside (3) has a decreasing path of curvature in a region of up to 20% of the relative section depth (x/l).

5. An aerofoil section according to claim 1, wherein the profile underside (3) has a third curvature maximum at 85% to 95% of the relative section depth (x/l).

6. An aerofoil section according to claim 1, wherein the paths of curvature on the profile upper side and the profile underside intersect at 50% to 60% of the relative section depth (x/l).

7. An aerofoil section according to claim 1, wherein the path of curvature of the upper side tends towards zero at the rear edge.

8. An aerofoil section according to claim 1, wherein the path of curvature of the underside tends towards zero at the rear edge.

9. An aerofoil section according to claim 1, wherein the form of the upper side outside the nose region is independent of the thickness of the section.

**Revendications**

1. Profil, notamment profil d'aile portante pour aéronefs, dont le nombre de Mach de conception est compris entre 0,2 et 0,9 et le coefficient de portance est situé dans une plage allant de −0,2 à 0,6 dans le domaine des grandes vitesses et allant respectivement jusqu'à 1,5 dans le domaine des basses vitesses, caractérisé en ce que

a) le profil présente une région de courbure constante qui s'étend sur le côté supérieur (2) du profil entre approximativement 30% et 50% de la profondeur relative (x/l) du profil et qui est située approximativement entre 20% et 40% de la profondeur relative (x/l) du profil sur le côté inférieur (3) de ce profil,

b) les régions de courbure constante se poursuivent, en vue de fixer la position du choc, par un second maximum de courbure se trouvant en dehors d'un premier respectif dans la région du bord d'attaque du profil sur le côté supérieur (2) du profil à approximativement 60% à 70% de la profondeur relative (x/l) du profil et sur le côté inférieur (3) du profil à approximativement 35% à 50% de la profondeur relative (x/l) du profil pour $|K| >0,60$, et

c) à ces régions de courbure maximale se raccordent des régions de recompression comprenant chacune au moins deux points d'inflexion dans la courbure du contour sur le côté supérieur (2) du profil et sur le côté inférieur (3) du profil, jusqu'au bord arrière de ce profil.

2. Aile portante selon la revendication 1, dans laquelle est prévu un premier maximum de courbure avec |k| >40% dans la région du bord d'attaque du profil respectivement sur le côté supérieur (2) du profil et sur le côté inférieur (3) du profil.

3. Profil d'aile portante selon la revendication 1, dans lequel est prévu, sur le côté supérieur du profil, quatre points d'inflexion de la courbure entre 2% et 6%, entre 55% et 65%, entre 65% et 75% et entre 85% et 95% de la profondeur relative (x/l) du profil.

4. Profil d'aile portante selon les revendications 1 à 3, dans lequel le côté inférieur (3) du profil présente une courbure dont l'allure va en diminuant dans une région allant jusqu'à 20% de la profondeur relative (x/l) du profil.

5. Profil d'aile portante selon la revendication 1, dans lequel le côté inférieur (3) du profil présente un troisième maximum de courbure entre 85% et 95% de la profondeur relative (x/l) du profil.

6. Profil d'aile portante selon la revendication 1, dans lequel les courbures du côté supérieur et du côté inférieur du profil se coupent entre 50% et 60% de la profondeur relative (x/l) du profil.

7. Profil d'aile portante selon la revendication 1, dans lequel la courbure du côté supérieur devient nulle sur le bord arrière.

8. Profil d'aile portante selon la revendication 1, dans lequel la courbure du côté inférieur devient nulle sur le bord arrière.

9. Profil d'aile portante selon la revendication 1, dans lequel la forme du côté supérieur en dehors de la région du bord d'attaque est indépendante de l'épaisseur du profil.

Fig. 1

Fig. 2

Fig. 3

Fig. 4

Fig. 5

Fig. 6

17

Fig. 7

Fig. 8

Fig. 9

Fig. 10

25

Fig. 11

Fig. 11

Fig. 12

0 076 936

M = 0.760

▲ Ausführung Fig. 7, Re = 8.6 · 10⁶

■ Ausführung Fig. 1, Re = 18.7 · 10⁶

Fig. 13

31